# EUROPEAN PATENT APPLICATION

(11) **EP 4 509 284 A1**
(43) Date of publication of application: **19.02.2025**
(21) Application number: 23192249.3
(22) Date of filing: 18.08.2023
(51) Int. Cl.: B27N 1/00, B27N 1/02, B27N 3/00, B27N 3/04, B27N 3/12, B27N 5/00, C08L 97/02, C09J 197/00, D04H 1/425, D04H 1/541, D04H 1/64, B27N 3/08, B29K 1/00, D04H 1/26

(54) **LOW DENSITY CELLULOSIC FIBER MATERIAL AND METHOD FOR MANUFACTURING THEREOF**

(71) Applicant: PaperShell AB, 543 50 Tibro (SE)
(72) Inventor: Breitholtz, Anders, 426 71 Västra Frölunda (SE)
(74) Representative: AWA Sweden AB

(57) **Abstract**

The present invention relates to a cellulosic fiber substrate comprising cellulosic fibers having a length of maximum 10mm, and a binding agent selected from a group consisiting of cellulose, hemicellulose, furan and derivatives thereof, lignin and combinations thereof, wherein the cellulosic fibre substrate has a density in the range from 0.1 g/cm³ to 0.7 g/cm³.

## Description

### TECHNICAL FIELD

The present invention relates to a cellulosic fiber material having low density and a method for manufacturing such a material.

### BACKGROUND

In view of the growing awareness of the negative environmental impacts of global warming and pollution of sea and soil, it is a necessity to replace pure fossil-based plastics, mineral filled plastics and fiber reinforced plastics (FRP), glass fiber reinforced plastics (GFRP) and carbon reinforced plastics (CFRP), with more environmentally friendly alternatives. FRP composites such as GFRP and or CFRP composites, exhibit a high or very high strength-to-weight ratio, and is extremely rigid due to the pronounced length and strength of the manmade non-degradable fibers. These FRP composites are often used in various applications where e.g., flexural strength, impact resistance and/or weather resistance is of importance, like in vehicles, in protective sport appliances, buildings, electric housing and the like. However, the environmental impact of these materials is high in both manufacturing of raw materials like glass or carbon fiber, production of an intermediate of the same, and disposal and/or recycling. Attempts have been made to replace fossil-based polymers in GFRP and CFRP materials with more environmentally friendly alternatives, e.g., bio based or bio attributed polymers. Further, attempts have been made to replace the glass or carbon fiber with natural fibers such as flax, hemp, sisal etc. However, the major challenge for both bio based and/or bio attributed, and renewable and/or natural fiber alternatives for GFRP and CFRP composites is the high price point, lack of sufficient volumes and consistency of quality in supply that can compete with the fossil-based polymers and manmade fibers.

Natural fiber composites (NFC) are divided into non-wood fiber-based composites and wood fibers and wood particles-based composites. Wood fibers are often shorter in length than other natural fibers like jute or flax. Due to the greater length of the non-wood fibers (natural fibers) e.g., the potential in flexural strength driven applications is greater than with the wood fibers and/or wood particles. Theses fibers often have high (>50%) cellulose with high tendency to be hydrophilic and generating problems such as natural rotting process, dimensions instability, delaminating and other problems due to climate cycling (moisture and temperature). To address these problems the NFC industry needs to saturate the composites with binders that often are fossil based such as thermosets and thermoplastics where >20% bio content is considered high in such systems. Meaning that these natural fibers are combined with fossil-based systems which is bad for the environment and very problematic to recycle or separate.

A large and stable renewable resource of cellulosic fibers is from the forest industries coming from different wood species, such as conifer or eucalyptus, in the pulp and paper production. Recently, a number of NFC materials have been produced combining cellulosic fibers from forests and polymers to decrease the environmental impacts and yet create load-bearing articles. Such materials are usually manufactured by mixing and compounding pure wood fibers or fibers form pulp and paper production into granulates for injection molding, wherein the final article is thus not based on layered sheets.

A well-known solution of creating load-bearing 3D single curved, or developable, solutions based on cellulosic fibers is wood veneer that comprises layers, wherein the long wood fibers in each layer are often placed perpendicularly to the wood fibers in the adjacent layers, and wherein the layers are heat-pressed in a single curved shape, such as a seat for a chair. For more complex 3D surfaces, such as double curved, or non-developable, surfaces, special and expensive 3D veneer or plastics is the only option, since the traditional veneer will tear and break at attempts to create a double-curved surface.

Another well-known example of using short cellulose fibers found in paper is to create flat load-bearing applications using high pressure laminate or HPL, consisting of several different layers of paper and surface materials, as well as polymer or phenolic binders. Although some special and exotic grades of HPL can be post-formed around single curved edges by application of heat and restraint and using a thermoplastic binder that can be post formed, HPL has never been used for manufacturing articles having complex 3D non-developable surface including combinations of single curve, double curve and/or revolutions and translations, e.g. a load bearing spheric shape for a helmet, cylindrical revolved surface for a vase or the complex surfaces for a hull of a boat.

In both examples above, indoor use is the intended use as natural fibers are hydrophobic and/or degrade with UV. In the case of HPL, the outmost layers oftentimes have a special coating with for increased scratch, UV and moisture resistance, as well as decorative looks, e.g., imitations of marble or wood. Such a material may for example be used as a countertop or a stack of laminate floor.

Another option to create complex 3D load-bearing articles comprising layers of fibers from a renewable natural source and having a high tensile and flexural strength is using long cellulosic fibers such as hemp, flax, ramie, and sisal. Such fibers may be weaved info flat yet 2D flexible mats/fabrics impregnated with a binder. These materials are frequently used for providing flat and 3D structures having advantageous mechanical properties. Here, the length of the fibers is of a paramount importance, wherein each fiber is placed on the complex 3D surface. This process is expensive, and the source of harvested fibers competes with food and textile industry. Another challenge is that the long natural fibers are hydrophilic, thus absorbing moisture and making them unsuitable for outdoor use and wet spaces. Also, the need of polymer binders still makes these natural fiber composites, just like any composites comprising polymers, difficult or impossible to recycle, thus disrupting plastics recycling loops.

Finally, it is known to combine cellulosic fibers with polymeric materials, such as thermoplastics, in order to manufacture a granulate for injection molding, extrusion and blow and press molding. Although the thermoplastic material may be bio-based and biodegradable, such a material is rather expensive and the bio-based solutions have inferior properties to fossil based resin systems. And there is an ongoing debate wether NCFs and bio based polymers, which in turn are based on crops grown in fields, compete with agriculture land needed for food production. Also in several cases the need for fertilisers and the low yield has shown that so called bio plastics have negative overall environmental impacts. On top of this you have the uncertainties of weather affecting harvests from year to year creating fluctuations in price.

WO2023/280918 discloses a cellulosic fiber substrate comprising 60 to 90 wt% of cellulosic fibers having a length of maximum 10mm, 0 to 10% of an acidic curing catalyst and 10 to 40 wt% of a binding agent selected form the group consisting of cellulose, hemicellulose, furan and derivatives thereof, lignin and combinations thereof. The cellulosic fiber substrate of WO2023/280918 may be used for obtaining articles having complex 3D structures. As further disclosed in WO2023/280918, such articles oftentimes comprise a plurality of layers.

When creating articles having complex 3D structures, it may be desirable to keep density of the material as low as possible in order to facilitate the forming step. To this end, it may be necessary to avoid arranging the material in layers. At the same time, the structural integrity of the material as well as the final product should be kept at a sufficient level.

Considering the challenges currently existing in the technical field, it is desired to provide a cellulosic fiber substrate comprising natural and renewable components having low environmental impact and improved drapability, while obtaining mechanical properties being comparable with fibers composites such as GFRP, fossil based polymers and even metals such as aluminium.

### SUMMARY

In view of the above, the present invention aims to solve at least some of the problems of the prior art. To this end, the present invention provides a cellulosic fiber substrate comprising cellulosic fibers having a length of maximum 10 mm, and a binding agent selected from a group consisiting of cellulose, hemicellulose, furan and derivatives thereof, lignin and combinations thereof. The cellolosic fibre substrate has a density in the range from 0.1 g/cm³ to 0.7 g/cm³. In particular, the cellulosic fibre substrate may have the density of said cellulosic fibre substrate is in the range from 0.2 to 0.5 g/cm³, preferably from 0.3 to 0.4 g/cm³.

The cellulosic fiber substrate according to the present invention offers the advantage of a low density and thus improved drapability when blanking, while maintaining the structural integrity and strength of a 3D article manufactured from the cellulosic fiber substrate.

The cellulosic fiber substrate according to the present invention may comprise from 60 to 90 wt% of the cellulosic fibers, and from 10 to 40 wt% of the binding agent. Further, the cellulosic fiber substrate may comprise 0 to 10 wt% of a curing catalyst.

As mentioned above, the cellulosic fiber substrate comprises cellulosic fibers having a length of maximum 10 mm. Cellulosic fibers are made with ethers or esters of cellulose, which can be obtained from the bark, wood or leaves of plants, or from other plant-based material. Cellulosic fibers may be derived from the conversion of wood into wood pulp. The length of each cellulosic fiber in the composite material may be same as or different from the length of the other cellulosic fibers. Indeed, it is conceivable that some of the cellulosic fibers may have a length being greater than 10 mm, but the amount of these fibers should be considered negligible. By the term "negligible" is understood as an amount below 0.01 wt%. Cellulosic fibers may be provided in any suitable form, such as sheets, rolls, batting or the like.

The cellulosic fibers that may be used for manufacturing the cellulosic fiber substrate according to the present invention can be recycled cellulosic fibers, which offers the advantage of decreasing the cost of the cellulosic fiber substrate and contributing to a circular economy. On the other hand, the cellulosic fibers may be virgin cellulosic fibers, which provides an increased tensile and/or flexural strength of the circuit board compared to when recycled cellulosic fibers are used. Further, it is conceivable that the cellulosic fibers is a mixture of recycled and virgin cellulosic fibers in a range of 0-100% virgin cellulosic fibers and 0-100% recycled cellulosic fibers respectively. The cellulosic fibers may comprise paper, e.g. softwood kraft paper, hardwood kraft paper, sulfite fibers, organosolv fibers, non-woven or combinations thereof. It is conceivable that the cellulosic fibers comprise from 50 to 90 wt% of the kraft paper. The paper may be provided in the form of sheets and/or in the form of continuous sheets, e.g. paper rolls.

The cellulosic fiber substrate of the present invention may comprise from 60 to 90 wt% of the cellulosic fibers and 10 to 40 wt% of the binding agent. The cellulosic fiber substrate may have an amount of biobased carbon of at least 80%, preferably at least 90%, more preferably at least 95%. The biobased carbon is derived in whole or in part from biomass resources. Biomass resources are organic materials that are available on a renewable or recurring basis such as crop residues, wood residues, grasses, and aquatic plants. On the contrary, non-biobased carbon is made entirely from petrochemical resources. The amount of biobased carbon referred to above is a measure of the amount of biobased carbon in the product as compared to the sum of biobased and petroleum-based carbon in the product. The term biobased carbon describes carbon of non-fossil origin and relates to the cellulosic fibers and/or binding agent and/or additives.

The cellulosic fiber substrate according to the present invention further comprises the binding agent selected form the group consisting of cellulose, hemicellulose, lignin, furan and derivatives thereof, preferably polyfurfuryl alcohol (PFA) and combinations thereof.

Preferably, the binding agent is polyfurfuryl alcohol (PFA). In such an embodiment, the curing catalyst is an acidic curing catalyst present in an amount from 0.1 to 10 wt%, preferably from 0.1 to 5 wt%. The acidic curing catalyst may be an organic or an inorganic acid, such as sulfuric acid, hydrochloric acid, or p-toluenesulfonic acid.

In particular, the cellulosic fibre substrate may be an airlaid or a non-woven.

The cellulosic fiber substrate may comprise additives such as a UV-agent, a conducting compound, a pigment, a hydrophobic substance, a softener, a hardener, a curing agent, or the like. The catalyst may be an acidic catalyst, e.g. an inorganic or organic acid. The catalyst may be added in a range of 0-10 wt% and may have a pH value <5 and/ or an acid number < 5mg KOH/g. The additive may be added in order to increase chemical, fire and wear resistance, and/or to increase curing speed, thus maximizing production.

In order to further improve structural integrity and strength of the article manufactured from the cellulosic fiber substrate according to the present invention, the cellulosic fiber substrate may further comprise a cofiber comprising at least one thermoplastic polymer. The cofiber may be added in the amount from 3 to 6 wt%.

The cofiber may have a melting temperature being lower than the curing temperature used when manufacturing an article using the cellulosic fiber substrate of the present invention. In such an embodiment, the cofiber will melt and act as an adhesive thus improving structural integrity of the article.

Alternatively, the cofiber may have a melting temperature being higher than the curing temperature used when manufacturing an article using the cellulosic fiber substrate of the present invention. In such an embodiment, the cofiber will not melt and will provide additional strength to the article.

According to another option, the cofiber may be a bicomponent fiber comprising a core comprising a first thermoplastic polymer having a first melting temperature Tm1, and a shell comprising a second thermoplastic polymer havng a second melting temperature Tm2, wherein the second melting temperature Tm2 is lower than the first melting temperature Tm1. In such an embodiment, the second melting temperature Tm2 may be lower that the curing temperature, and the first melting temperature may be higher than the curing temperature. When the cellulosic fiber substrate according to such an embodiment is cured, the shell will melt thus improving structural integrity of the article, while the core will remain solid thus providing additional stregth to the article.

In order to maintain the environmentally friendly profile of the cellulosic fiber substrate, the cofiber may comprise, or consist of a rewevable and/or biodegradable thermoplastic polymer, such as polylactic acid (PLA) or polyhydroxy alkanoate (PHA).

The present invention further relates to a method for manufacturing a cellulosic fiber substrate, the method comprising the steps of:
a) providing an impregnated fibre substrate comprising cellulosic fibers having a maximum length of 10 mm impregnated with a binding agent selected from a group consisiting of cellulose, hemicellulose, furan and derivatives thereof, lignin and combinations thereof;
b) treating the impregnated fibre substrate by means of heat and/or pressure, thus obtaining the cellulosic fiber substrate.

According to the present invention, the temperature during step b) may be in the range from 130°C to 160°C. The pressure may be in the range from 7 kg/cm² to 100 kg/cm².

The impregnated fibre substrate may be provided by the steps of:
a') providing the cellulosic fibers having a maximum length of 10 mm;
b') impregnating the cellulosic fibers with a binding agent selected from a group consisiting of cellulose, hemicellulose, furan and derivatives thereof, lignin and combinations thereof;
c') arranging the cellulosic fibers into a fibre substrate;
wherein step b') and c') occur in any order.

In other words, it is conceivable to first impregnate the cellulosic fibers, followed by the step of airlaying the impregnated cellulosic fibers. Such an embodiment allows a more homogeneous impregnation and reduced amount of binder. Alternatively, the cellulosic fibers may first be airlayed, and the resulting mat may be impregnated with the binding agent. Such an embodiment offers the advantage of a simplified manufacturing process.

The impregnated fibre substrate may be provided by the steps of:
a") providing a prepreg comprising the cellulosic fibers impregnated with a binding agent selected from a group consisiting of cellulose, hemicellulose, furan and derivatives thereof, lignin and combinations thereof;
b") shredding the prepreg thus obtaining impregnated cellulosic fibers;
c") arranging the impregnated cellulosic fibers into impregnated fibre substrate.

Such an embodiment offers the advantage of recycling the prepregs used during manufacturing of 3D articles, i.e. as described in WO2023/280918, thus lowering the environmental impact and the costs. Further, since the prepreg already comprises the binding agent, such a binding agent does not have to be added, thus improving efficiency of the method. When the prepregs are shredded, particles are formed having the size of from 0.5 to 20 mm, preferably from 1-10 mm, more preferably 1-5 mm.

The method according to the present invention may further comprises the step of:
d) adding a cofiber comprising at least one thermoplastic polymer.

When step d) is present, it may occur before step c') or step c"). In other words, the cofiber is added before the cellulosic fibers are arranged into fibre substrate.

The method according to the present invention may further comprise the step of:
e) curing the cellulosic fiber substrate.

In particular, step b) and/or step e) may be performed at a pressure of at least 7 kg/cm², preferably at least 25 kg/cm², more preferably at least 30 kg/cm² and the temperature of at least 60°C, preferably at least 140°C, more preferably at least 150°C during a time period of at least 10 seconds, preferably at least one minute, more preferably at least two minutes.

As mentioned above, the binding agent may polyfurfuryl alcohol (PFA). The binding agent may already be present in the cellulosic fibers if prepregs are used. In such an embodiment, the addition of the binding agent may be omitted.

The cellulosic fiber substrate may be used for manufacturing a 3D article having at least one top surface and/or bottom surface having at least one developable and/or non-developable surface portion.

In the context of the present invention, a developable surface is a smooth surface with zero Gaussian curvature. A Gaussian curvature is defined as a product of two principal curvatures of a surface. Put differently, a developable surface is a non-flat surface that can be flattened onto a plane without distortion, i.e. it can be bent without stretching or compression. Conversely, it is a surface which can be made by transforming a plane by means of folding, bending, rolling, cutting and/or gluing. Examples of a developable surface are cylinders and cones.

On the contrary, a non-developable surface is a surface with non-zero Gaussian curvature. A non-developable surface is thus a non-flat surface that cannot be flattened onto a plane without distortion. Most of surfaces in general are non-developable surfaces. Non-developable surfaces may be referred to as doubly curved surfaces. One of the most often-used non-developable surfaces is a sphere.

The cellulosic fiber substrate of the present invention may have at least one portion comprising a radius of curvature being below 10 cm, preferably below 5 cm.

When the cellulosic fibers are arranged into cellulosic fibre substrate, the cellulosic fibers in the cellulosic fiber substrate may be arranged substantially parallel, substantially crisscrossed, substantially random or arranged in a combination thereof.

In one embodiment, a load bearing 3D article is provided, wherein the load bearing article has a tensile strength least of at least 40 MPa, preferably at least 50 MPa, more preferably at least 100 MPa.

In one embodiment, a load bearing 3D article is provided, wherein the load bearing article has a thickness of at least 0.1 mm, preferably 2.5 mm, preferably at least 5 mm, more preferably at least 10 mm.

As mentioned above, the cellulosic fiber substrate of the present invention may comprise from 10 to 40 wt% of a binding agent. The cellulosic fiber substrate according to the present invention further comprises the binding agent selected form the group of consisting of thermoset resins, reactive thermoplastic resins, cellulose, hemicellulose, lignin, bio-based polymers and combinations thereof. Thermoset resins may be substituted and non-substituted furan, epoxy, polyurethane, or phenolic resin. The reactive thermoplastic resins may have similar performance after curing as thermosets and may be in liquid or powder form. Such binding agents are readily available, cost-efficient, oftentimes biodegradable, and environmentally friendly. In particular, the binding agent is polyfurfuryl alcohol (PFA). Among bio-based polymers polylactic acid, the poly L-lactide, polyhydroxybuturate, polyhydroxyalkalonates (PHAs), polyamide, polypropylene (PP) and polyethylene terephthalate can be mentioned.

The cellulosic fibers may be randomly oriented or may be oriented such that the longitudinal extensions of the fibers are substantially parallel or substantially crisscrossed. To this end, the fibers may be positioned such that the longitudinal extension of the major portion of the fibers (the grain direction) is aligned in the same direction. It has been shown that the tensile and/or flexural strength in the direction being parallel to the grain direction is significantly higher compared to the tensile and/or flexural strength in the direction being perpendicular to the grain direction, e.g. as much as two times higher. Therefore, it is possible to design cellulosic fiber substrates such that tensile and/or flexural and/or flexural strength is adapted to the intended use.

It is known that cellulosic fiber substrate comprising long cellulosic fibers, such as hemp, flax, ramie, and sisal can exhibit rather high tensile and/or flexural strength. It has been surprisingly found that the 3D article of the present invention comprising a cellulosic fiber substrate comprising short cellulosic fibers, i.e. cellulosic fibers having length of maximum 10 mm, preferably maximum 4 mm, exhibit the tensile and/or flexural strength being comparable to natural fiber cellulosic fiber substrate having long cellulosic fibers. At the same time, due to the fact that the short cellulosic fibers become impregnated by the binding agent, the article comprising short cellulosic fibers becomes water-repellant to a larger extent compared to an article comprising long cellulosic fibers. The term "water-repellant" means hydrophobic and/or having a density that prevents water from penetrating the material. Since the short cellulosic fibers are easily movable within the cellulosic fiber substrate during manufacturing, the layers are enabled to merge, as the fibers may "float" and fill cracks and tearing that may appear during manufacturing of cellulosic fiber substrates having complex surface structures. According to the present invention it is possible to manufacture cellulosic fiber substrates having small radii of curvature, which is a known problem in the area of creating complex 3D structures.

Further, it has been found that the cellulosic fiber substrate according to the present invention is inflammable and self-extinguishable. According to a glow wire test performed, in accordance with IEC 60695-2-12:2021, the cellulosic fiber substrate according to the invention when cured with PFA as a binding agent, passed the temperature test at 650° and 850° C. The cellulosic fiber substrate according to the present invention is fire resistant according to STD 104-0001/ISO3795, UV resistant according to STD 423-0061, scratch resistant according to STD 423-0030, heat resistant according to Volvo STD 423-0055, impact resistant according to EN 13087 and tested VOC free according to Volvo STD 429-0003. The density of the cellulosic fiber substrate according to the present invention was measured 1,34 g/cm³ according to ISO11183, the glass transition temperature Tg was measured 145 °C according to ISO 11358 and the Charpy impact strenth was measured to be 8,6 kJ/m² according to ISO 179. Life cycle analysis calcuations performed on the cellulosic fiber substrate according to the resent invention resulted in 0,65 kgCO₂ - eq.

Examples of 3D articles made of the cellulosic fiber substrates of the present invention are sport appliances, such as helmets and skateboards, furniture items, such as chairs and tables, and vehicle parts, such as dashboards, door handles and interior parts. Further, cellulosic fiber substrates may be used in architecture and building, consumer electronics, major appliance, and the like.

The cellulosic fiber substrates of the present invention may thus replace currently available cellulosic fiber substrates comprising more expensive and less environmentally friendly materials, such as plastic and GFRP, without compromising, and in comparison with plastics and woods even improving, the tensile and flexural strength.

The cellulosic fiber substrates of the present invention have high moisture resistance, which is highly beneficial when the cellulosic fiber substrates are intended for outdoor use, or for use in a moist environment, such as a bathroom or in a humid climate. Further, the finishing of the surface of cellulosic fiber substrates of the present invention is highly decorative and aesthetically appealing and may further be adjusted to the desired application. In particular, the surface of the cellulosic fiber substrates may be shiny or dull. The cellulosic fiber subtrates may have a gloss - satin finish, a matte finish, a rough surface, a patterned surface or have a surface with text or pictures on. The cellulosic fiber substrate and 3D articles manufactured therefom according to the present invention may have various thicknessess over the entire detail or the same thickness over the entire detail.

The 3D articles manufactured from the fiber substrate according to the present invention may have a thickness of at least 1.5 mm, preferably at least 2.5 mm, preferably at least 5 mm, more preferably at least 10 mm. As is evident from above, the cellulosic fiber substrate of the present invention exhibits an unprecedented strength despite the relatively low thickness. The cellulosic fiber substrate thus combines low weight and slim structure with a great impact strength. The cellulosic fiber substrate 3D articles manufactured therefrom according to the present invention may also have a significantly greater thickness, such as a thickness of at least 20 mm, preferably at least 40 mm, more preferably at least 50 mm. Further, the total surface area of the cellulosic fiber substrate may be at least 0.1 m². In particular, the total surface area of the cellulosic fiber substrate may be from 0.3 m² to 100 m². In other words, the cellulosic fiber substrate may be rather large and still exhibit unprecedented strength, which enables using such articles for impact-absorbing applications.

The cellulosic fiber substrate according to the present invention may comprise at least one surface layer. By the term "surface layer" is in the context of the present invention is understood a layer being arranged on the surface of the cellulosic fiber substrate. Such a surface layer may be arranged in order to provide scratch resistance, UV resistance, food compatibility, aesthetic appearance, anti-bacterial property, color, surface structure, friction or any other functionality that may be desired.

In one embodiment, a load bearing 3D article is provided, wherein the load bearing article has a tensile strength least of at least 40 MPa, preferably at least 50 MPa, more preferably at least 100 MPa.

In one embodiment, a load bearing 3D article is provided, wherein the load bearing article has a thickness of at least 2.5 mm, preferably at least 5 mm, more preferably at least 10 mm.

Further features of, and advantages with, the present invention will become apparent when studying the appended claims and the following description. The skilled person realizes that different features of the present invention may be combined to create embodiments other than those described in the following, without departing from the scope of the present invention.

### BRIEF DESCRIPTION OF THE DRAWINGS

These and other aspects of the present invention will now be described in more detail, with reference to the appended drawings showing embodiments of the invention, of which:
Figs. 1 depicts a cellulosic fiber substrates according to the present invention;
Fig. 2 illustrates another example of a cellulosic fiber substrate comprising a bicomponent cofiber;
Fig. 3 shows a cross-section of the bicomponent cofiber;
Fig. 4 depicts the steps of the method according to the present invention.

### DETAILED DESCRIPTION OF THE PRESENT INVENTION

The present invention will now be described hereinafter with reference to the accompanying drawings, in which exemplifying embodiments of the present invention are shown. The present invention may, however, be embodied in many different forms and should not be construed as limited to the embodiments of the present invention set forth herein; rather, these embodiments of the present invention are provided by way of example so that this disclosure will convey the scope of the invention to those skilled in the art. In the drawings, identical reference numerals denote the same or similar components having a same or similar function, unless specifically stated otherwise.

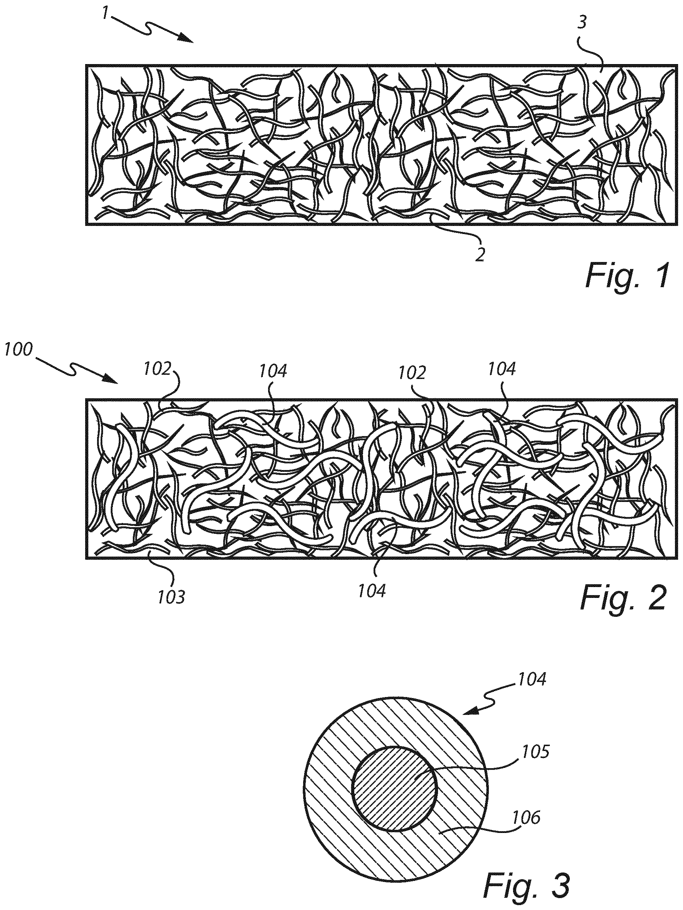

Fig. 1 illustrates a cellulosic fiber substrate 1 comprising cellulosic fibers 2 having a length of maximum 10 mm, and a binding agent 3 selected from a group consisiting of cellulose, hemicellulose, furan and derivatives thereof, lignin and combinations thereof. The density of the cellulosic fibre substrate is in the range from 0.1 to 0.7 g/cm³.

The cellulosic fiber substrate 1 offers the advantage of a low density and thus improved drapability, while maintaining the structural integrity and strength of a 3D article manufactured from the cellulosic fiber substrate.

The cellulosic fiber substrate 1 according to the present invention may comprise from 60 to 90 wt% of the cellulosic fibers 2, and from 10 to 40 wt% of the binding agent 3. Further, the cellulosic fiber substrate may comprise 0 to 10 wt% of a curing catalyst (not shown).

In order to further improve structural integrity and strength of the article manufactured from the cellulosic fiber substrate according to the present invention, the cellulosic fiber substrate 100 further comprises a cofiber 104 comprising at least one thermoplastic polymer. The cofiber 104 may be added in the amount from 3 to 6 wt%.

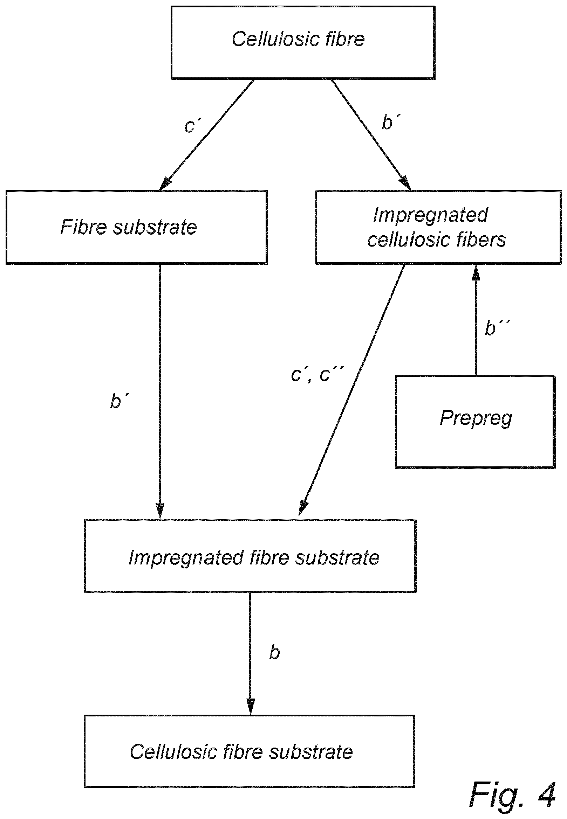

The cofiber 104 is a bicomponent fiber comprising a core 105 comprising a first thermoplastic polymer having a first melting temperature Tm1, and a shell 106 comprising a second thermoplastic polymer havng a second melting temperature Tm2, wherein the second melting temperature Tm2 is lower than the first melting temperature Tm1 (Fig. 4). In such an embodiment, the second melting temperature Tm2 may be lower that the curing temperature, and the first melting temperature may be higher than the curing temperature. When the cellulosic fiber substrate 100 according to such an embodiment is cured, the shell 106 will melt thus improving structural integrity of the article, while the core 105 will remain solid thus providing additional stregth to the article.

Fig. 4 depicts schematic overview of the method for manufacturing a cellulosic fiber substrate. As may be seen in Fig. 4, an impregnated may be provided by airlaying the cellulosic fibers, and then impregnating the airlaig (step c' followed by step b'). Alternatively, the impregnated may be provided by impregnating the cellulosic fibers with a binding agent, followed by airlaying the impregnated fibers (step b' followed by step c').

As depicted in Fig. 4, the impregnated cellulosic fibers may be provided by shredding a prepreg comprising the cellulosic fibers impregnated with a binding agent selected from a group consisiting of cellulose, hemicellulose, furan and derivatives thereof, lignin and combinations thereof (step b").

To summarize, the present invention provides cellulosic fiber substrates comprising cellulosic fibers, which is a natural, readily available, highly recyclable, and thus environmentally friendly and cost-efficient material. The surprising and unexpected effect of the present invention is that the mechanical properties, e.g. flexural and tensile strength of the cellulosic fiber substrate of the present invention is comparable to the tensile and/or flexural strength of the 3D articles manufactured from GFRP, yet being made of short cellulosic fibers in combination with a bio-based binder, which provides the freedom of design to create complex 3D surfaces especially comprising non-developable portions. Another advantage of the present invention is that by-products from food and agriculture industry are used as a binding agent, which contributes to circular economy and is environmentally benign.

While the present invention has been illustrated in the appended drawings and the foregoing description, such illustration is to be considered illustrative or exemplifying and not restrictive; the present invention is not limited to the disclosed embodiments. Other variations to the disclosed embodiments can be understood and effected by those skilled in the art in practicing the claimed invention, from a study of the drawings, the disclosure, and the appended claims. In the appended claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A cellulosic fiber substrate comprising cellulosic fibers having a length of maximum 10mm, and a binding agent selected from a group consisiting of cellulose, hemicellulose, furan and derivatives thereof, lignin and combinations thereof,
wherein said cellulosic fibre substrate has a density in the range from 0.1 g/cm³ to 0.7 g/cm³.

2. The cellulosic fiber substrate according to claim 1, wherein said cellulosic fiber substrate comprises from 60 to 90 wt% of said cellulosic fibers, and from 10 to 40 wt% of said binding agent.

3. The cellulosic fiber substrate according to claim 1 or 2, wherein said binding agent is polyfurfuryl alcohol (PFA).

4. The cellulosic fiber substrate according to any one of the preceding claims, wherein said cellulosic fiber substrate further comprises a cofiber comprising at least one thermoplastic polymer.

5. The cellulosic fiber substrate according to claim 6, wherein said cofiber is added in the amount from 3 to 6 wt%.

6. The cellulosic fiber substrate according to claim 6 or 7, wherein said cofiber is a bicomponent fiber comprising a core comprising a first thermoplastic polymer having a first melting temperature Tm1, and a shell comprising a second thermoplastic polymer havng a second melting temperature Tm2, wherein said second melting temperature Tm2 is lower than said first melting temperature Tm1.

7. A method for manufacturing a cellulosic fiber substrate, the method comprising the steps of:
a) providing an impregnated fibre substrate comprising cellulosic fibers having a maximum length of 10 mm impregnated with a binding agent selected from a group consisiting of cellulose, hemicellulose, furan and derivatives thereof, lignin and combinations thereof;
b) treating said impregnated fibre substrate by means of heat and/or pressure, thus obtaining said cellulosic fiber substrate.

8. The method according to claim 7, wherein said impregnated fibre substrate is provided by the steps of:
a') providing said cellulosic fibers having a maximum length of 10 mm;
b') impregnating said cellulosic fibers with a binding agent selected from a group consisiting of cellulose, hemicellulose, furan and derivatives thereof, lignin and combinations thereof;
c') arranging said cellulosic fibers into a fibre substrate;
wherein step b') and c') occur in any order.

9. The method according to claim 7, wherein said impregnated fibre substrate is provided by the steps of:
a") providing a prepreg comprising said cellulosic fibers impregnated with a binding agent selected from a group consisiting of cellulose, hemicellulose, furan and derivatives thereof, lignin and combinations thereof;
b") shredding said prepreg thus obtaining impregnated cellulosic fibers;
c") arranging said impregnated cellulosic fibers into said impregnated fibre substrate.

10. The method according to any one of claims 8 or 9, wherein said method further comprises the step of:
d) adding a cofiber comprising at least one thermoplastic polymer;
wherein said step d) occurs before step c') or step c").

11. The method according to claim 10, wherein said cofiber is added in the amount from 3 to 6 wt%.

12. The method according to claim 10 or 11, wherein said cofiber comprises a core comprising a first thermoplastic polymer having a first melting temperature Tm1, and a shell comprising a second thermoplastic polymer havng a second melting temperature Tm2, wherein said second melting temperature Tm2 is lower than said first melting temperature Tm1.

13. The method according to claim 12, wherein the temperature during said step b) is higher than said second melting temperature.

14. The method according to any one of claims 7-13, wherein the temperature during said step b) is in the range from 130°C to 160°C.

15. The method according to any one of claims 7-14, wherein said step b) is performed at a pressure of at least 7 kg/cm², preferably at least 25 kg/cm², more preferably at least 30 kg/cm² and the temperature of at least 60°C, preferably at least 140°C, more preferably at least 150°C during a time period of at least 10 seconds, preferably at least one minute, more preferably at least two minutes.
